# EUROPEAN PATENT APPLICATION

(11) **EP 4 648 436 A1**
(43) Date of publication of application: **12.11.2025**
(21) Application number: 24752864.9
(22) Date of filing: 05.02.2024
(51) Int. Cl.: H04Q 11/00

(54) **DATA PROCESSING METHOD AND APPARATUS, AND RELATED DEVICES AND STORAGE MEDIUM**

(30) Priority: 06.02.2023 CN 202310114019
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Sheng, Beijing 100053 (CN); LI, Yunbo, Beijing 100053 (CN); LI, Han, Beijing 100053 (CN); ZHANG, Dechao, Beijing 100053 (CN); WANG, Dong, Beijing 100053 (CN); HAN, Liuyan, Beijing 100053 (CN)
(74) Representative: Patentgruppen A/S
(86) International application number: PCT/CN2024/076134
(87) International publication number: WO 2024/165009

(57) **Abstract**

The present application discloses data processing methods, data processing apparatuses, sending end devices, receiving end devices and storage medium. The method includes: mapping, by a sending end device, a first service into a first frame, and a frame structure of the first frame satisfies one of the following: the number of rows is 4, the number of columns is 3824, columns 1 to 16 are overhead of the first frame, and part of columns 17 to 3824 also includes the overhead of the first frame; the number of rows is 4, the number of columns is 3824, columns 1 to 16 and columns 1905 to 1920 are the overhead of the first frame; the number of rows is 4, the number of columns is 3824, and columns 1 to 16 and columns 1913 to 1929 are the overhead of the first frame; the number of rows is 4, the number of columns is 3824, columns 1 to 16, columns 965 to 968, columns 1917 to 1920, columns 2869 to 2872, and columns 3821 to 3824 are the overhead of the first frame; the number of rows is 4, the number of columns is X, columns 1 to Y are the overhead of the first frame, where X is an integer less than 2000, and Y is an integer less than or equal to 8.

## Description

### CROSS-REFERENCE TO RELATED APPLICATION

This application claims a priority of the Chinese patent application No. 202310114019.8 filed on February 6, 2023, which is incorporated herein by reference in its entirety.

### TECHNICAL FIELD

The present application relates to the field of optical transport network (OTN), and in particular to data processing methods, data processing apparatuses, related devices and storage media.

### BACKGROUND

OTN technology is widely used in various business scenarios. Accordingly, OTN faces more and more data processing requirements for different bandwidth services.

However, various OTN frame structures in the related art may not meet the data processing requirements of specific services.

### SUMMARY

To solve the related technical problems, the embodiments of the present application provide data processing methods, data processing apparatuses, related devices and storage media.

The technical solutions of the embodiments of the present application are implemented as follows.

An exemplary embodiment of the present application provides a data processing method, which is performed by a sending end device, including:
mapping a first service into a first frame, wherein a frame structure of the first frame satisfies one of the following:
the number of rows is 4, the number of columns is 3824, columns 1 to 16 are overhead of the first frame, and part of columns 17 to 3824 also include the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are the overheads of the first frame; or,
the number of rows is 4, the number of columns is X, columns 1 to Y are the overhead of the first frame, where X is an integer less than 2000, and Y is an integer less than or equal to 8.

In one embodiment, the method further includes:
sending the first frame.

Another exemplary embodiment of the present application also provides a data processing method, which is performed by a sending end device, including:
mapping a second service into a second frame, wherein each row in a frame structure of the second frame includes at least one Frame Align Sequence (FAS).

In one embodiment, the method further includes:
sending the second frame.

Another exemplary embodiment of the present application also provides a data processing method, which is performed by a sending end device, including:
mapping a third service into a third frame, wherein each row in a frame structure of the third frame includes at least one Multi-frame Align Sequence (MFAS).

In one embodiment, the method further includes:
sending the third frame.

Another exemplary embodiment of the present application also provides a data processing method, which is performed by a sending end device, including:
mapping a fourth service into a fourth frame, wherein overhead of the fourth frame includes first information, the first information is used for one-way delay measurement, the first information includes at least a first timestamp, and the first timestamp represents timing when the first information is placed in the fourth frame.

In one embodiment, the first information is placed in a Tandem Connection Monitoring (TCM) field or a Path Monitoring (PM) field.

In one embodiment, the method further includes:
sending the fourth frame.

Another exemplary embodiment of the present application also provides a data processing method, which is performed by a sending end device, including:
mapping a fifth service into a fifth frame, wherein overhead of the fifth frame includes second information, the second information is used for two-way delay measurement, the second information includes at least a second timestamp, and the second timestamp represents timing when the second information is placed in the fifth frame.

In one embodiment, the second information is placed in a TCM field or a PM field.

In one embodiment, the method further includes:
sending the fifth frame.

In one embodiment, the method further includes:
receiving a sixth frame, wherein overhead of the sixth frame includes third information, the third information is used for two-way delay measurement, the third information at least includes the second timestamp, a third timestamp and a fourth timestamp, the third timestamp represents timing when a receiving end device receives the fifth frame, and the fourth timestamp represents timing when the third information is placed in the sixth frame.

In one embodiment, the method further includes:
determining a result of the two-way delay measurement on the basis of the second timestamp, the third timestamp, the fourth timestamp, and the fifth timestamp, wherein the fifth timestamp represents timing when the sending end device receives the sixth frame.

In one embodiment, the third information is placed in the TCM field or the PM field.

Another exemplary embodiment of the present application also provides a data processing method, performed by a receiving end device, including:
receiving a fourth frame, wherein overhead of the fourth frame includes first information, the first information is used for one-way delay measurement, the first information includes at least a first timestamp, and the first timestamp represents timing when the first information is placed in the fourth frame; and
parsing the fourth frame to obtain a fourth service.

In one embodiment, the method further includes:
calculating a difference between a sixth timestamp and the first timestamp to obtain a result of the one-way delay measurement, wherein the sixth timestamp represents timing when the receiving end device receives the fourth frame.

In one embodiment, the first information is placed in a TCM field or a PM field.

Another exemplary embodiment of the present application also provides a data processing method, performed by a receiving end device, including:
receiving a fifth frame, wherein overhead of the fifth frame includes second information, the second information is used for two-way delay measurement, the second information includes at least a second timestamp, and the second timestamp represents timing when the second information is placed in the fifth frame; and
parsing the fifth frame to obtain a fifth service.

In one embodiment, the second information is placed in a TCM field or a PM field.

In one embodiment, the method further includes:
sending the sixth frame, wherein overhead of the sixth frame includes third information, the third information is used for two-way delay measurement, the third information at least includes the second timestamp, a third timestamp and a fourth timestamp, the third timestamp represents timing when the receiving end device receives the fifth frame, and the fourth timestamp represents timing when the third information is placed in the sixth frame.

In one embodiment, the third information is placed in a TCM field or a PM field.

The present application also provides a data processing apparatus, including:
a first mapping unit configured to map a first service into a first frame, wherein a frame structure of the first frame satisfies one of the following:
the number of rows is 4, the number of columns is 3824, columns 1 to 16 are overhead of the first frame, and part of columns 17 to 3824 also comprise the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are the overhead of the first frame; or,
the number of rows is 4, the number of columns is X, columns 1 to Y are the overhead of the first frame, where X is an integer less than 2000, and Y is an integer less than or equal to 8.

The present application also provides a data processing apparatus, including:
a second mapping unit configured to map a second service into a second frame, wherein each row in a frame structure of the second frame includes at least one Frame Align Sequence (FAS).

The present application also provides a data processing apparatus, including:
a third mapping unit configured to map a third service into a third frame, wherein each row in a frame structure of the third frame includes at least one Multi-frame Align Sequence (MFAS).

The present application also provides a data processing apparatus, including:
a fourth mapping unit configured to map a fourth service into a fourth frame, wherein overhead of the fourth frame includes first information, the first information is used for one-way delay measurement, the first information includes at least a first timestamp, and the first timestamp represents timing when the first information is placed in the fourth frame.

The present application also provides a data processing apparatus, including:
a fifth mapping unit configured to map a fifth service into a fifth frame, wherein overhead of the fifth frame includes second information, the second information is used for two-way delay measurement, the second information includes at least a second timestamp, and the second timestamp represents timing when the second information is placed in the fifth frame.

The present application also provides a data processing apparatus, including:
a fifth receiving unit configured to receive a fourth frame, wherein overhead of the fourth frame includes first information, the first information is used for one-way delay measurement, the first information includes at least a first timestamp, and the first timestamp represents timing when the first information is placed in the fourth frame; and
a fourth parsing unit configured to parse the fourth frame to obtain a fourth service.

The present application also provides a data processing apparatus, including:
a sixth receiving unit configured to receive a fifth frame, wherein overhead of the fifth frame includes second information, the second information is used for two-way delay measurement, the second information includes at least a second timestamp, and the second timestamp represents timing when the second information is placed in the fifth frame; and
a fifth parsing unit configured to parse the fifth frame to obtain a fifth service.

The present application also provides a sending end device, including: a first communication interface and a first processor; wherein,
the first processor is configured to map a first service into a first frame, wherein a frame structure of the first frame satisfies one of the following:
the number of rows is 4, the number of columns is 3824, columns 1 to 16 are overhead of the first frame, and part of columns 17 to 3824 also comprise the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are the overhead of the first frame; or,
the number of rows is 4, the number of columns is X, columns 1 to Y are the overhead of the first frame, where X is an integer less than 2000, and Y is an integer less than or equal to 8.

The present application also provides a sending end device, including: a first communication interface and a first processor; wherein,
the first processor is configured to map a second service into a second frame, wherein each row in a frame structure of the second frame includes at least one FAS.

The present application also provides a sending end device, including: a first communication interface and a first processor; wherein,
the first processor is configured to map a third service into a third frame, wherein each row in a frame structure of the third frame includes at least one MFAS.

The present application also provides a sending end device, including: a first communication interface and a first processor; wherein,
the first processor is configured to map a fourth service to a fourth frame, wherein overhead of the fourth frame includes first information, the first information is used for one-way delay measurement, the first information includes at least a first timestamp, and the first timestamp represents timing when the first information is placed in the fourth frame.

The present application also provides a sending end device, including: a first communication interface and a first processor; wherein,
the first processor is configured to map a fifth service into a fifth frame, wherein overhead of the fifth frame includes second information, the second information is used for two-way delay measurement, the second information includes at least a second timestamp, and the second timestamp represents timing when the second information is placed in the fifth frame.

The present application also provides a receiving end device, including:
a second communication interface configured to receive a fourth frame, wherein overhead of the fourth frame includes first information, the first information is used for one-way delay measurement, the first information includes at least a first timestamp, and the first timestamp represents timing when the first information is placed in the fourth frame; and
a second processor configured to parse the fourth frame to obtain a fourth service.

The present application also provides a receiving end device, including:
a second communication interface configured to receive a fifth frame, wherein overhead of the fifth frame includes second information, the second information is used for two-way delay measurement, the second information includes at least a second timestamp, and the second timestamp represents timing when the second information is placed in the fifth frame; and
a second processor configured to parse the fifth frame to obtain a fifth service.

One exemplary embodiment of the present application further provides a sending end device, including: a first processor and a first memory for storing a computer program that are executed on the first processor,
wherein, when the first processor is used to execute the computer program, steps of any of the above-mentioned methods on the sending end device are carried out.

The present application further provides a receiving end device, including: a second processor and a second memory for storing a computer program that is executed on the second processor,
wherein, when the second processor is used to execute the computer program, steps of any one of the above-mentioned methods on the receiving end device are carried out.

Another embodiment of the present application also provides a storage medium on which a computer program is stored thereon. When the computer program is executed by a processor, the steps of any methods on the sending end device or the steps of any methods on the receiving end device are implemented.

In accordance with the data processing methods, the data processing apparatuses, relevant devices and storage media provided in the embodiments of the present application, the sending end device maps a first service into a first frame, and a frame structure of the first frame satisfies one of the following: the number of rows is 4, the number of columns is 3824, the 1st to 16th columns are the overhead of the first frame, and part of the 17th to 3824th columns also include the overhead of the first frame; or, the number of rows is 4, the number of columns is 3824, the 1st to 16th columns and the 1905th to 1920th columns are the overhead of the first frame; or, the number of rows is 4, the number of columns is 3824, the 1st to 16th columns and the 1913th to 1929th are the overhead of the first frame; or, the number of rows is 4, the number of columns is 3824, the 1st to 16th columns, the 965th to 968th columns, the 1917th to 1920th columns, the 2869th to 2872th columns, and the 3821th to 3824th columns are the overhead of the first frame; or, the number of rows is 4, the number of columns is X, the 1st to Yth columns are the overhead of the first frame, where X is an integer less than 2000, and Y is an integer less than or equal to 8. The solutions provided by the embodiments of the present application defines new frames that carry therein service data in the OTN system. For small bandwidth services (such as services with a data transmission rate in the range of 10 megabits per second (Mbps) to 10 gigabits per second (Gbps)), the frequency of occurrence of overhead in the frame structure is increased by increasing frame overhead or shortening frame length. Since the occurrence frequency of overhead in the frame structure is associated with the time when the OTN system performs protection switching, the time when the OTN system performs protection switching can be shortened, thereby improving the processing efficiency of service data, that is, improving the transmission efficiency of service data.

In addition, in accordance with the data processing methods, the data processing apparatuses, relevant devices and storage media provided in the embodiments of the present application, the sending end device maps a second service to a second frame, and each row in the frame structure of the second frame includes at least one FAS. In this way, the number of FASs in the frame structure is increased, thereby improving the frame positioning speed.

In addition, in accordance with the data processing methods, the data processing apparatuses, relevant devices and storage media provided in the embodiments of the present application, the sending end device maps a third service to a third frame, and each row in the frame structure of the third frame includes at least one MFAS. In this way, the number of MFAS is increased in the frame structure, thereby improving the multi-frame positioning speed.

In addition, in accordance with the data processing methods, the data processing apparatuses, relevant devices and storage media provided in the embodiments of the present application, the sending end device maps a fourth service to a fourth frame, the overhead of the fourth frame includes first information, the first information is used for one-way delay measurement, the first information includes at least a first timestamp, and the first timestamp represents timing when the first information is placed in the fourth frame. In this way, the one-way delay measurement can be implemented based on the timestamp subsequently, thereby improving the accuracy of the one-way delay measurement.

In addition, in accordance with the data processing methods, the data processing apparatuses, relevant devices and storage media provided in the embodiments of the present application, the sending end device maps a fifth service to a fifth frame, the overhead of the fifth frame includes second information, the second information is used for two-way delay measurement, the second information includes at least a second timestamp, and the second timestamp represents timing when the second information is placed in the fifth frame. In this way, the two-way delay measurement can be implemented based on the timestamp subsequently, thereby improving the accuracy of the two-way delay measurement.

### BRIEF DESCRIPTION OF THE DRAWINGS

FIG. 1 is a schematic diagram of a mapping mechanism of an OTN system in the related art;
FIG. 2 is a schematic diagram of an OTN frame structure in the related art;
FIG. 3 is a flow chart of a data processing method according to an embodiment of the present application;
FIG. 4 is a schematic diagram of the frame structure of the first frame according to an embodiment of the present application;
FIG. 5 is a flow chart of another data processing method according to an embodiment of the present application;
FIG. 6 is a schematic diagram of FAS in the frame structure of the second frame according to an embodiment of the present application;
FIG. 7 is a schematic diagram of a flow chart of a third data processing method according to an embodiment of the present application;
FIG. 8 is a schematic diagram of MFAS in the frame structure of the third frame according to an embodiment of the present application;
FIG. 9 is a schematic diagram of a flow chart of a fourth data processing method according to an embodiment of the present application;
FIG. 10 is a schematic diagram of the format of a first timestamp according to an embodiment of the present application;
FIG. 11 is a schematic diagram of communication between a sending end device and a receiving end device according to an embodiment of the present application;
FIG. 12 is a schematic diagram of a flow chart of a fifth data processing method according to an embodiment of the present application;
FIG. 13 is a schematic diagram of another communication between a sending end device and a receiving end device according to an embodiment of the present application;
FIG. 14 is a schematic diagram of a flow chart of a sixth data processing method according to an embodiment of the present application;
FIG. 15 is a schematic diagram of a flow chart of a seventh data processing method according to an embodiment of the present application;
FIG. 16 is a schematic diagram of a flow chart of an eighth data processing method according to an embodiment of the present application;
FIG. 17 is a schematic diagram of a flow chart of a ninth data processing method according to an embodiment of the present application;
FIG. 18 is a schematic diagram of a flow chart of a tenth data processing method according to an embodiment of the present application;
FIG. 19 is a schematic diagram of the structure of a data processing apparatus according to an embodiment of the present application;
FIG. 20 is a schematic diagram of the structure of another data processing apparatus according to an embodiment of the present application;
FIG. 21 is a schematic diagram of the structure of a third data processing apparatus according to an embodiment of the present application;
FIG. 22 is a schematic diagram of the structure of a fourth data processing apparatus according to an embodiment of the present application;
FIG. 23 is a schematic diagram of the structure of a fifth data processing apparatus according to an embodiment of the present application;
FIG. 24 is a schematic diagram of the structure of a sixth data processing apparatus according to an embodiment of the present application;
FIG. 25 is a schematic diagram of the structure of a seventh data processing apparatus according to an embodiment of the present application;
FIG. 26 is a schematic diagram of the structure of an eighth data processing apparatus according to an embodiment of the present application;
FIG. 27 is a schematic diagram of the structure of a ninth data processing apparatus according to an embodiment of the present application;
FIG. 28 is a schematic diagram of the structure of a tenth data processing apparatus according to an embodiment of the present application;
FIG. 29 is a schematic diagram of the structure of a sending end device according to an embodiment of the present application;
FIG. 30 is a schematic diagram of the structure of a receiving end device according to an embodiment of the present application; and
FIG. 31 is a schematic diagram of the structure of the data processing system according to an embodiment of the present application.

### DETAILED DESCRIPTION

The present application is further described in detail below in conjunction with the accompanying drawings and embodiments.

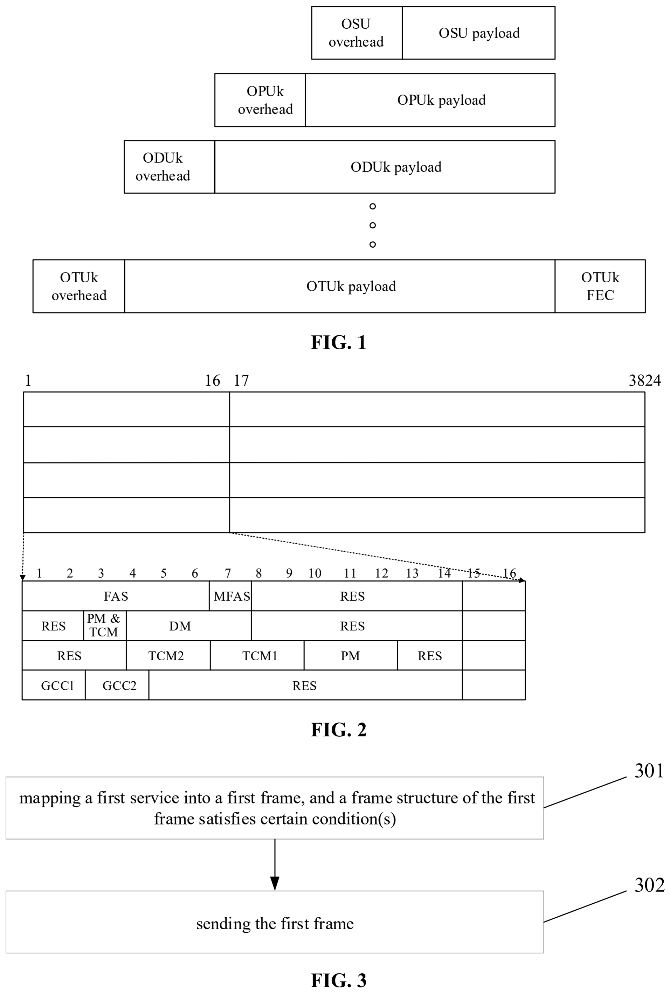

In the related art, the traditional OTN network (i.e., OTN system) introduces the Optical Service Unit (OSU) mechanism to carry small particles (i.e., small bandwidth) of 10 Mbps to 10 Gbps. This mechanism can also be called as Sub-1G or fgOTN (fine grain OTN) mechanism. At this time, the mapping mechanism of the OTN system is shown in FIG. 1. After the service (i.e., service data) is transmitted to the OTN device supporting the OSU mechanism, the OTN device first maps the service into an OSU frame (or Sub-1G frame , or a small particle ODU (fine grain ODU, fgODU) frame, or a small particle flexible ODU (fine grain ODU flexible, fgODUflex) frame), encapsulates the OSU frame (or fgODUflex frame, or fgODU frame) into an Optical Payload Unit (OPU) frame, encapsulates the OPU frame into an Optical Channel Data Unit (ODU) frame, and then encapsulates the ODU frame into an Optical Transform Unit (OTU) frame. Among them, when the OTN device encapsulates the OSU frame (or fgODUflex frame, or fgODU frame) into the OPU frame, the OSU frame (or fgODUflex frame, or fgODU frame) can be first mapped to the optical service time slot unit or the optical service tributary unit (OSTU, Optical Service Tributary Unit) frame (or fine grain Optical Data Tributary Unit (fgODTU) frame), and then the OSTU frame (or fgODTU frame) is multiplexed into the OPU frame.

However, if the OSU frame (i.e., Sub-1G frame) adopts the traditional OTN frame structure of 4*3824 as shown in FIG. 2, the following problems may occur.

Problem 1: Only columns 1 to 16 are the overhead of the OSU frame. The frequency of the overhead (which can also be understood as the frequency of overhead repetition) cannot meet the performance of the protection switching time in the OTN system. In other words, the frequency of the overhead in the OSU frame is insufficient, resulting in insufficient performance of the protection switching time.

Problem 2: The overhead of the OSU frame contains only one FAS, and the number of FASs cannot meet the positioning requirements of the OSU frame. In other words, the number of FASs is insufficient, resulting in slow OSU frame positioning.

Problem 3: The overhead of the OSU frame contains only one MFAS, and the number of MFAS cannot meet the multi-frame alignment requirements of the OSU frame.

Problem 4: The overhead of the OSU frame has only one bit for the delay measurement (DM) function. When measuring the delay, the source end (i.e., the sender or the sending end) flips the DM bit from 0 to 1 and sends it to the sink end (i.e., the receiver or the receiving end). The sink end then returns the DM information (i.e., the DM bit) to the source end. After receiving the DM information, the source end calculates the number of frame periods from sending the DM information to receiving the DM information and multiplies it by the frame frequency to obtain the round-trip delay result (i.e., the delay measurement result). Since the transmission time of each frame changes dynamically, the accuracy of this delay measurement method is limited.

From the above description, it can be seen that the OTN frame structure in the related art may not meet the data processing requirements of small bandwidth services. In other words, due to the performance requirements of the OSU mechanism (i.e., Sub-1G), the OSU frame (i.e., Sub-1G frame) requires a new frame structure and/or frame overhead.

Based on the above, in response to the above-mentioned problem 1, in various embodiments of the present application, a new OSU frame (i.e., Sub-1G frame) that carries service data is defined in the OTN system. For small bandwidth services (such as services with data transmission rates ranging from 10 Mbps to 10 Gbps), the occurrence frequency of overhead in the frame structure of the OSU frame is increased by increasing the frame overhead or shortening the frame length. Since the occurrence frequency of the overhead in the frame structure is associated with the time when the OTN system performs protection switching, the time when the OTN system performs protection switching can be shortened, thereby improving the processing efficiency of service data, that is, improving the transmission efficiency of service data.

In response to the above-mentioned problem 2, in various embodiments of the present application, each row in the frame structure of the OSU frame (i.e., Sub-1G frame) contains at least one FAS, thereby increasing the number of FASs in the OSU frame structure, thereby improving the positioning speed of the OSU frame.

In response to the above-mentioned problem 3, in various embodiments of the present application, each row in the frame structure of the OSU frame (i.e., Sub-1G frame) contains at least one MFAS, thereby increasing the number of MFAS in the OSU frame structure, thereby improving the multi-frame positioning speed of the OSU frame.

In response to the above-mentioned problem 4, in various embodiments of the present application, new DM information including a timestamp is defined for one-way delay measurement (1DM) in the OTN system, so that one-way delay measurement can be implemented based on the timestamp subsequently, thereby improving the accuracy of one-way delay measurement.

In response to the above-mentioned problem 4, in various embodiments of the present application, new DM information including timestamps is defined for two-way delay measurement (2DM) in the OTN system, so that two-way delay measurement can be implemented based on the timestamp subsequently, thereby improving the accuracy of two-way delay measurement.

It should be noted that in various embodiments of the present application, various services (first service, second service, third service, fourth service, fifth service) may be the same service or different services. These services may include small bandwidth services, such as services with data transmission rates ranging from 10 Mbps to 10 Gbps. In addition, the types of these services may include fixed rate (CBR, Constant Bit Rate) services, such as synchronous transfer mode (STM)-N services, etc., and the STM-N services may include STM-1, STM-4, STM-16, STM-64, etc. Alternatively, the types of these services may include variable rate (VBR, Variable Bit Rate) services, such as packet services, etc. In addition, the related processing of these services can be understood as the related processing of service data.

In various embodiments of the present application, various frames (first frame, second frame, third frame, fourth frame, fifth frame, sixth frame) carrying service data may be the same frame or different frames. These frames may be understood as containers for carrying service data, and these frames may also be referred to as containers, OSU frames, OSU containers, Sub-1G frames, Sub-1G containers, etc. The embodiments of the present application do not limit the names of these frames as long as their functions are implemented.

In various embodiments of the present application, when the sending end device and the receiving end device transmit various frames (first frame, second frame, third frame, fourth frame, fifth frame, sixth frame), these frames can be first encapsulated into OSTU frames through preset intermediate steps, and then the OSTU frames are encapsulated into OPU frames and/or ODU frames, and then the OPU frames and/or ODU frames are transmitted. Among them, the OPU frames may include OPUflex frames, OPU0 frames, OPU1 frames, OPU2 frames, OPU3 frames, OPU4 frames, etc.

In various embodiments of the present application, the sending end device may include an optical communication device, specifically an OTN device, etc. Accordingly, the receiving end device may also include an optical communication device, specifically an OTN device, etc. The specific types of the sending end device and the receiving end device may be set according to the requirements, and the embodiments of the present application do not limit this. In addition, the sending end device may also be called a source device, a source node (which can also be expressed as Source Node), etc.; the receiving end device may also be called a sink device, a sink node (which can be also expressed as a destination node), etc. The embodiments of the present application do not limit the names of the sending end device and the receiving end device, as long as their functions are realized.

Specifically, in response to the above-mentioned problem 1, an embodiment of the present application provides a data processing method, which is applied to a sending end device. As shown in FIG. 3, the method includes the following step(s).

Step 301: mapping a first service to a first frame, that is, carry, encapsulate or place data of the first service into the first frame, and the frame structure of the first frame satisfies one of the following conditions.

Condition 1, the number of rows is 4, the number of columns is 3824, columns 1 to 16 are the overhead of the first frame, and part of columns 17 to 3824 also include the overhead of the first frame.

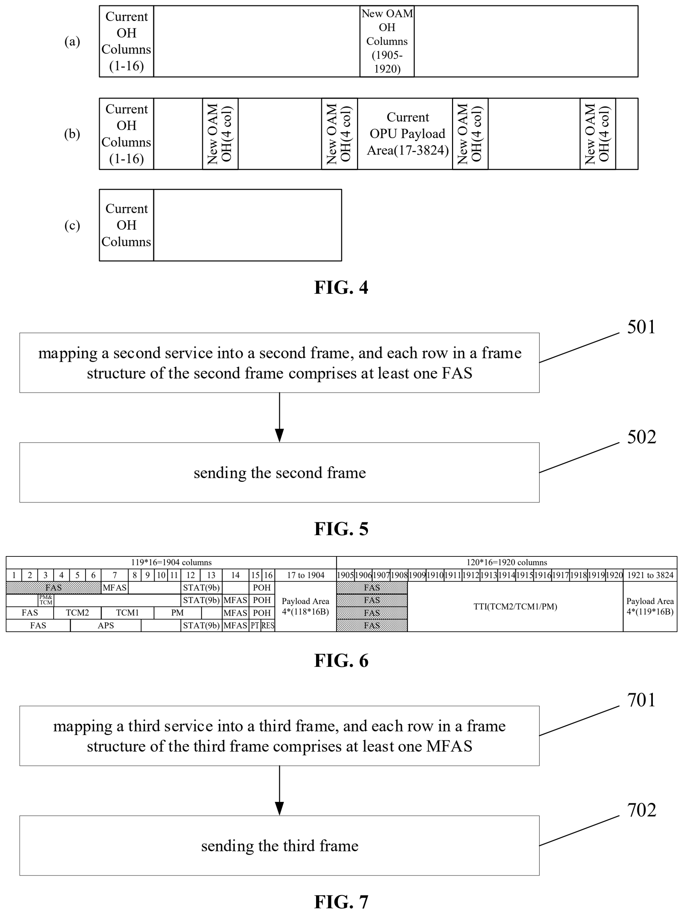

Condition 2, as shown in FIG. 4(a), the number of rows is 4, the number of columns is 3824, and columns 1 to 16 and columns 1905 to 1920 are the overhead of the first frame.

Condition 3, the number of rows is 4, the number of columns is 3824, and columns 1 to 16 and columns 1913 to 1929 are the overhead of the first frame.

Condition 4, as shown in FIG. 4(b), the number of rows is 4, the number of columns is 3824, and columns 1 to 16, columns 965 to 968, columns 1917 to 1920, columns 2869 to 2872, and columns 3821 to 3824 are the overhead of the first frame.

Condition 5, as shown in FIG. 4(c), the number of rows is 4, the number of columns is X, columns 1 to Y are the overhead of the first frame, where X is an integer less than 2000, and Y is an integer less than or equal to 8.

In one embodiment, as shown in FIG. 3, the method may further include the following step(s).

Step 302: sending the first frame, that is, sending the first frame to a receiving end device.

In actual application, the receiving end device can receive the first frame sent by the sending end device, parse the first frame, and obtain the first service, that is, obtain the data of the first service. In this way, through the above conditions 1/condition 2/condition 3/condition 4, it is possible to increase the overhead in the frame structure, and through the above condition 5, it is possible to shorten the frame length. In this way, the frequency of the overhead in the frame structure of the first frame can be increased, thereby shortening the time for the OTN system to perform protection switching, thereby improving the processing efficiency of service data, that is, improving the transmission efficiency of service data.

In response to the above-mentioned problem 2, one exemplary embodiment of the present application further provides a data processing method, which is applied to a sending end device. As shown in FIG. 5, the method includes the following step(s).

Step 501: mapping the second service to the second frame, that is, carry, encapsulate or place data of the second service into the second frame, and each row in the frame structure of the second frame includes at least one FAS.

In one embodiment, as shown in FIG. 5, the method may further include the following step(s).

Step 502: sending the second frame, that is, sending the second frame to the receiving end device.

In actual application, the number of FASs contained in each row of the frame structure of the second frame can be set according to actual need, and the number of FASs contained in each row can be the same or different. For example, as shown in FIG. 6, the first row in the frame structure of the second frame can contain two FASs, and the second row, the third row, and the fourth row can each contain one FAS.

In actual application, the receiving end device can receive the second frame sent by the sending end device, parse the second frame, and obtain the second service, that is, obtain the data of the second service. In this way, the number of FASs in the second frame is increased, thereby improving the positioning speed of the second frame.

In response to the above problem 3, one exemplary embodiment of the present application further provides a data processing method, which is applied to a sending end device. As shown in FIG. 7, the method includes the following step(s).

Step 701: mapping the third service to a third frame, that is, carry, encapsulate or place data of the third service into the third frame, and each row in the frame structure of the third frame includes at least one MFAS.

In one embodiment, as shown in FIG. 7, the method may further include the following step(s).

Step 702: sending the third frame, that is, send the third frame to a receiving end device.

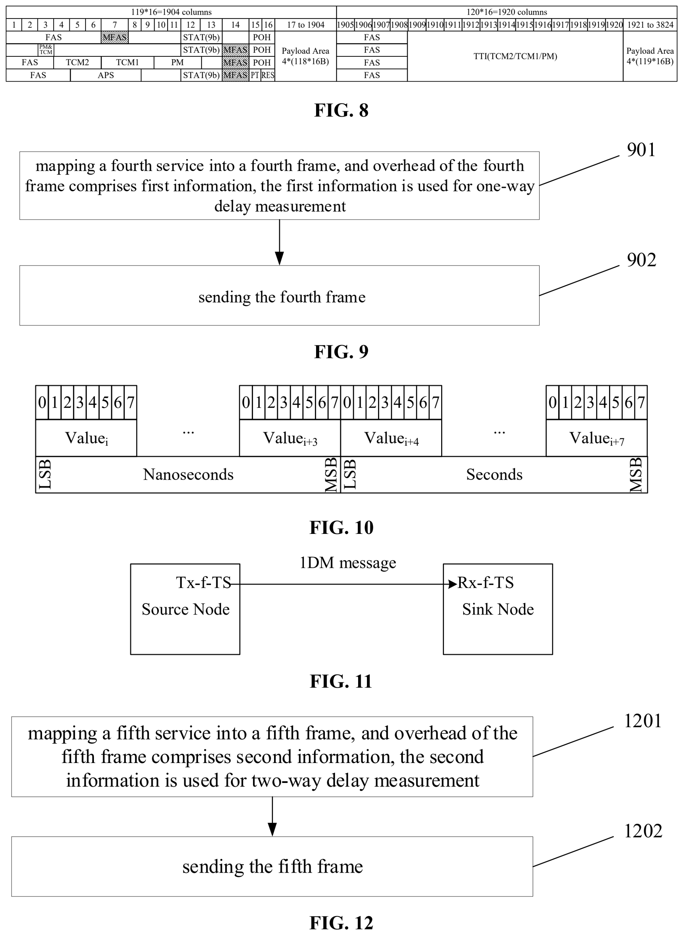

In actual application, the number of MFASs included in each row of the frame structure of the third frame can be set according to actual needs, and the number of MFASs included in each row can be the same or different. For example, as shown in FIG. 8, each row in the frame structure of the third frame can include one MFAS.

In actual application, the receiving end device can receive the third frame sent by the sending end device, parse the third frame, and obtain the third service, that is, obtain the data of the third service. In this way, the number of MFAS in the third frame is increased, so that the multi-frame alignment speed of the third frame can be improved.

In response to the above-mentioned problem 4, one exemplary embodiment of the present application further provides a data processing method, which is applied to a sending end device. As shown in FIG. 9, the method includes the following step(s).

Step 901: Mapping the fourth service to the fourth frame, that is, carry, encapsulate or place data of the fourth service into the fourth frame, the overhead of the fourth frame includes first information, the first information is used for one-way delay measurement, the first information includes at least a first timestamp, and the first timestamp represents timing when the first information is placed (also understood as inserted) in the fourth frame.

In one embodiment, as shown in FIG. 9, the method may further include the following step(s).

Step 901: sending the fourth frame, that is, sending the fourth frame to a receiving end device.

In actual application, the first information may also be called as DM information or 1DM information or 1DM message, etc. The embodiment of the present application does not limit the name of the first information as long as its function is realized.

In actual application, the length of the first information can be set according to actual needs. For example, the length of the first information can be a multiple of 8, such as 8 bytes, 16 bytes, 32 bytes, etc.

In actual application, the first information can be placed in the overhead of the fourth frame, specifically in the overhead position corresponding to TCM or PM. In other words, the first information can be placed in the TCM field or the PM field.

In actual application, the first timestamp represents the timing when the first information is placed in the fourth frame, which can also be understood as the timing when the fourth frame is generated, the timing when the first timestamp is generated and placed in the fourth frame, or the timing when the sending end device maps the fourth service to the fourth frame, that is, the timing when the sending end device carries, encapsulates or places the data of the fourth service in the fourth frame. In addition, the first timestamp can also represent the timing when the fourth frame is sent, that is, the timing when the sending end device sends the fourth frame to the receiving end device. In other words, although there is a time difference between the timing when the fourth frame is generated and the timing when the fourth frame is sent, the timing difference can be ignored.

In actual application, the format of the first timestamp can be set according to actual needs. For example, as shown in FIG. 10, the first timestamp can include a 32-bit nanosecond part (expressed as nanoseconds) and a 32-bit second part (expressed as seconds).

In actual application, the receiving end device may receive the fourth frame sent by the sending end device, parse the fourth frame, and obtain the fourth service, that is, obtain the data of the fourth service.

In actual application, after receiving the fourth frame, the receiving end device can perform a one-way delay measurement. Specifically, the receiving end device can calculate the difference between the sixth timestamp and the first timestamp to obtain the result of the one-way delay measurement. Here, the sixth timestamp represents the timing when the receiving end device receives the fourth frame, and the format of the sixth timestamp can be the same as the first timestamp. Exemplarily, as shown in FIG. 11, the source node (i.e., the sending end device) can send an 8-byte 1DM message (which can be expressed as message) (i.e., the first information) to the sink node (i.e., the receiving end device), that is, bytes 1 to 8 in the 1DM message can be the timestamp (i.e., the first timestamp) of generating the OSU frame (i.e., the fourth frame). Specifically, when the source node generates the OSU frame, the timestamp when the OSU frame is generated can be placed in the overhead area of the OSU frame, and when the sink node receives the OSU frame, the difference between the timing when the OSU frame is received (i.e., the sixth timestamp) and the timestamp contained in the OSU frame can be calculated to obtain the one-way delay measurement result. In this way, one-way delay measurement based on timestamps (i.e., the first timestamp and the sixth timestamp) is implemented, thereby improving the accuracy of one-way delay measurement.

In actual application, the sixth timestamp represents the timing when the receiving end device receives the fourth frame, and can also be understood as the timing when the receiving end device receives the fourth frame and generates the sixth timestamp. In other words, the receiving end device generates the sixth timestamp at the same time as receiving the fourth frame.

In response to the above-mentioned problem 4, one exemplary embodiment of the present application further provides a data processing method, which is applied to a sending end device. As shown in FIG. 12, the method includes the following step(s).

Step 1201: mapping the fifth service to the fifth frame, that is, carry, encapsulate or place the data of the fifth service in the fifth frame, the overhead of the fifth frame includes second information, the second information is used for two-way delay measurement, the second information includes at least a second timestamp, and the second timestamp represents the timing when the second information is placed in the fifth frame.

In one embodiment, as shown in FIG. 12, the method may further include the following step(s).

Step 1202: sending the fifth frame, that is, sending the fifth frame to the receiving end device.

In actual application, the second information may also be called as DM information or 2DM information or 2DM message, etc. The embodiment of the present application does not limit the name of the second information as long as its function is realized.

In actual application, the length of the second information can be set according to requirements. For example, the length of the second information can be a multiple of 8, such as 8 bytes, 16 bytes, 32 bytes, etc.

In actual application, the second information can be placed in the overhead of the fifth frame, specifically in the TCM field or the PM field.

In actual application, the second timestamp represents the timing when the second information is placed in the fifth frame, which can also be understood as the timing when the fifth frame is generated, the timing when the second timestamp is generated and placed in the fifth frame, or the timing when the sending end device maps the fifth service to the fifth frame, that is, the timing when the sending end device carries, encapsulates or places the data of the fifth service in the fifth frame. In addition, the second timestamp can also represent the timing when the fifth frame is sent, that is, the timing when the sending end device sends the fifth frame to the receiving end device. In other words, although there is a time difference between the timing when the fifth frame is generated and the timing when the fifth frame is sent, the time difference can be ignored.

In actual application, the format of the second timestamp may be the same as or different from the format of the first timestamp, and this embodiment of the present application does not limit this.

In actual application, the receiving end device may receive the fifth frame sent by the sending end device, parse the fifth frame, and obtain the fifth service, that is, obtain the data of the fifth service.

In actual application, in order to enable the sending end device to perform two-way delay measurement, the receiving end device can send a sixth frame to the sending end device after receiving the fifth frame. The overhead of the sixth frame includes third information, and the third information is used for two-way delay measurement. The third information includes at least the second timestamp, the third timestamp and the fourth timestamp. The third timestamp represents the timing when the receiving end device receives the fifth frame, and the fourth timestamp represents the timing when the third information is placed in the sixth frame.

Based on this, in one embodiment, the method may further include: receiving the sixth frame, that is, receiving the sixth frame sent by the receiving end device, the overhead of the sixth frame includes third information, the third information is used for two-way delay measurement, the third information at least includes the second timestamp, the third timestamp and the fourth timestamp, the third timestamp represents the timing when the receiving end device receives the fifth frame, and the fourth timestamp represents the timing when the third information is placed in the sixth frame.

In actual application, the third information may also be called as DM information or 2DM information or 2DM message or two-way delay measurement response (2DMR, 2DM Response) message, etc. The embodiment of the present application does not limit the name of the third information as long as its function is realized.

In actual application, the length of the third information can be set according to actual needs. For example, the length of the third information can be a multiple of 8, such as 8 bytes, 16 bytes, 32 bytes, etc.

In actual application, the third information may be placed in the overhead of the sixth frame, specifically in the TCM field or the PM field.

In actual application, the format of the third timestamp may be the same as or different from that of the first timestamp, and the format of the fourth timestamp may be the same as or different from that of the first timestamp, which is not limited in this embodiment of the present application.

In actual application, the third timestamp represents the timing when the receiving end device receives the fifth frame, and can also be understood as the timing when the receiving end device receives the fifth frame and generates the third timestamp. In other words, the receiving end device generates the third timestamp at the same time as receiving the fifth frame.

In actual application, the fourth timestamp represents the timing when the third information is placed in the sixth frame, which can also be understood as the timing when the sixth frame is generated or the timing when the fourth timestamp is generated and placed in the sixth frame. In addition, the fourth timestamp can also represent the timing when the sixth frame is sent, that is, the timing when the receiving end device sends the sixth frame to the sending end device. In other words, although there is a time difference between the timing when the sixth frame is generated and the timing when the sixth frame is sent, the time difference can be ignored.

In actual application, after receiving the sixth frame, the sending end device can perform two-way delay measurement based on the timing when the sixth frame is received (called as the fifth timestamp in the subsequent description) and the second timestamp, the third timestamp and the fourth timestamp.

Based on this, in one embodiment, the method may further include: determining a result of a two-way delay measurement based on the second timestamp, the third timestamp, the fourth timestamp, and the fifth timestamp, wherein the fifth timestamp represents the timing when the sending end device receives the sixth frame.

The format of the fifth timestamp and the first timestamp may be the same or different, which is not limited in the embodiment of the present application.

In actual application, the fifth timestamp represents the timing when the sending end device receives the sixth frame, and can also be understood as the timing when the sending end device receives the sixth frame and generates the fifth timestamp. In other words, the sending end device generates the fifth timestamp at the same time as receiving the sixth frame.

In actual application, the sending end device can respectively calculate the difference between the third timestamp and the second timestamp, and the difference between the fifth timestamp and the fourth timestamp, and use the two differences as the results of the two-way delay measurement. Alternatively, the sending end device can first respectively calculate the difference between the third timestamp and the second timestamp, and the difference between the fifth timestamp and the fourth timestamp, and then calculate the average value of the two differences, and use the average value as the result of the two-way delay measurement.

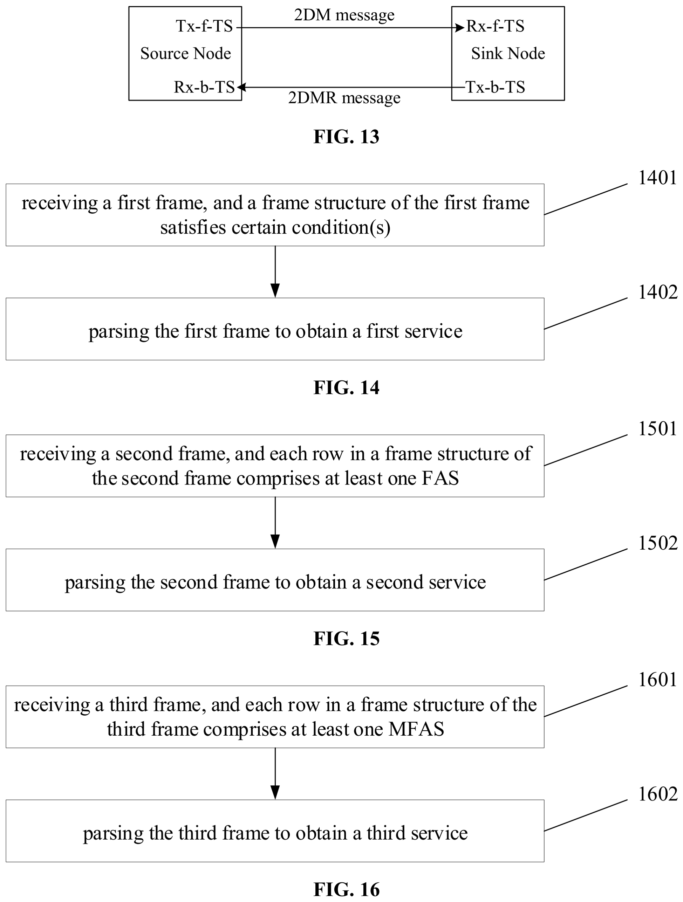

In actual application, as shown in FIG. 13, the source node (i.e., the sending end device) can send an 8-byte 2DM message (i.e., the second information) to the sink node (i.e., the receiving end device), that is, bytes 1 to 8 in the 2DM message can be the timestamp (i.e., the second timestamp) of the OSU frame (i.e., the fifth frame) generated by the source node; after receiving the 2DM message, the sink node can generate a 24-byte 2DMR message (i.e., the third information) and send the 2DMR message to the source node. Here, bytes 1 to 8 (i.e., the 1st to 8th bytes) in the 2DMR message can be the timestamp (i.e., the second timestamp) of the OSU frame generated by the source node, bytes 9 to 16 (i.e., the 9th to 16th bytes) can be the timestamp (i.e., the third timestamp) of the OSU frame that is sent by the source node received by the sink node, and bytes 17 to 24 (i.e., the 17th to 24th bytes) can be the timestamp (i.e., the fourth timestamp) of the sink node for the purpose of the generation of the OSU frame (i.e., the sixth frame). Specifically, when the source node generates such an OSU frame (i.e., the sixth frame), the timestamp (i.e., the fourth timestamp) for the purpose of the generation of the OSU frame (i.e., the sixth frame) can be placed in the overhead area of the OSU frame when the source node generates the OSU frame. After the sink node receives the OSU frame, it can generate an OSU frame for feedback and feed it back to the source node. When generating the OSU frame for feedback, the sink node can place the timestamp of the generation of the OSU frame by the source node, the timestamp of the OSU frame that is sent by the source node received by the sink node, and the timestamp of the generation of the OSU frame by the sink node in the overhead area of the OSU frame. After the source node receives the OSU frame for feedback, it can obtain the result of the two-way delay measurement according to the three timestamps contained in the OSU frame and the timing when the OSU frame is received (i.e., the fifth timestamp). In this way, the two-way delay measurement based on the timestamps (i.e., the second timestamp, the third timestamp, the fourth timestamp, and the fifth timestamp) is realized, thereby improving the accuracy of the two-way delay measurement.

Accordingly, in response to the above problem 1, one exemplary embodiment of the present application further provides a data processing method, which is applied to a receiving end device, as shown in FIG. 14, and the method including the following step(s).

Step 1401: receiving a first frame, that is, receiving the first frame sent by a sending end device, wherein the frame structure of the first frame satisfies one of the following:
the number of rows is 4, the number of columns is 3824, columns 1 to 16 are overhead of the first frame, and part of columns 17 to 3824 also include the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are the overheads of the first frame; or,
the number of rows is 4, the number of columns is X, columns 1 to Y are overheads of the first frame, where X is an integer less than 2000, and Y is an integer less than or equal to 8.

Step 1402: parsing the first frame to obtain a first service.

Accordingly, in response to the above-mentioned problem 2, one exemplary embodiment of the present application further provides a data processing method, which is applied to a receiving end device, as shown in FIG. 15, and the method including:
Step 1501: receiving a second frame, that is, receiving the second frame sent by a sending end device, wherein each row in a frame structure of the second frame includes at least one FAS; and
Step 1502: parsing the second frame to obtain a second service.

Accordingly, in response to the above-mentioned problem 3, an embodiment of the present application further provides a data processing method, which is applied to a receiving end device, as shown in FIG. 16, and the method including:
Step 1601: receiving a third frame, that is, receiving the third frame sent by a sending end device, wherein each row in the frame structure of the third frame includes at least one MFAS; and
Step 1602: parsing the third frame to obtain a third service.

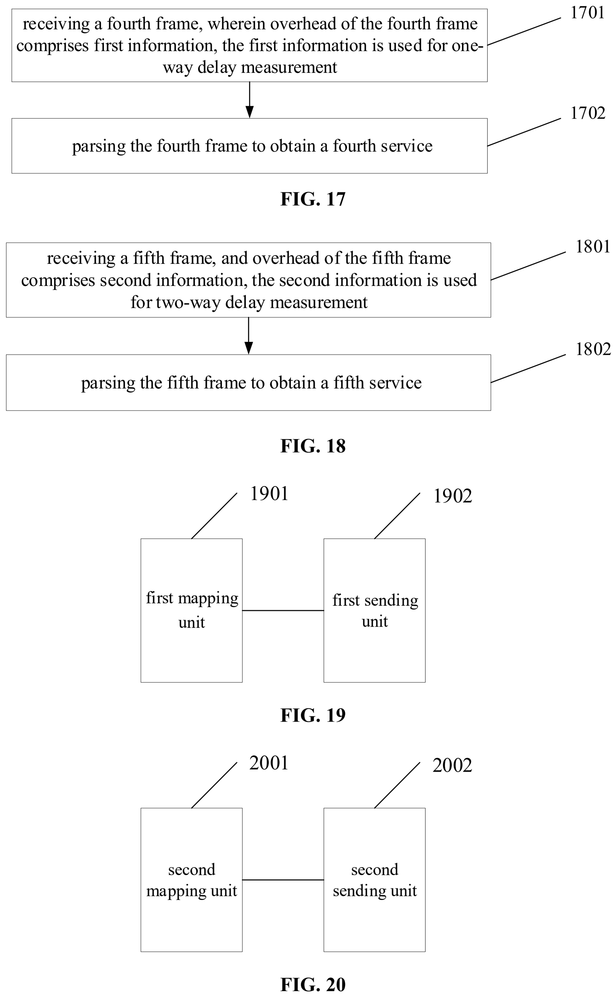

Accordingly, in response to the above-mentioned problem 4, one exemplary embodiment of the present application further provides a data processing method, which is applied to a receiving end device, as shown in FIG. 17, and the method including:
Step 1701: receiving a fourth frame, that is, receiving the fourth frame sent by a sending end device, wherein the overhead of the fourth frame includes first information, the first information is used for one-way delay measurement, and the first information includes at least a first timestamp, and the first timestamp represents the timing when the first information is placed in the fourth frame; and
Step 1702: parsing the fourth frame to obtain a fourth service.

In one embodiment, the method may further include:
calculating a difference between a sixth timestamp and the first timestamp to obtain a result of one-way delay measurement, wherein the sixth timestamp represents the timing when the receiving end device receives the fourth frame.

Accordingly, in response to the above-mentioned problem 4, an embodiment of the present application further provides a data processing method, which is applied to a receiving end device. As shown in FIG. 18, the method includes:
Step 1801: receiving a fifth frame, that is, receiving the fifth frame sent by a sending end device, wherein the overhead of the fifth frame includes second information, the second information is used for two-way delay measurement, and the second information includes at least a second timestamp, and the second timestamp represents the timing when the second information is placed in the fifth frame; and
Step 1802: parsing the fifth frame to obtain a fifth service.

In one embodiment, the method may further include:
sending the sixth frame, namely sending the sixth frame to the sending end device, wherein the overhead of the sixth frame includes third information, the third information is used for two-way delay measurement, the third information includes at least the second timestamp, the third timestamp and the fourth timestamp. Specifically, the third timestamp represents the timing when the receiving end device receives the fifth frame, and the fourth timestamp represents the timing when the third information is placed in the sixth frame.

In the data processing method provided by one exemplary embodiment of the present application, for the above-mentioned problem 1, the sending end device maps the first service into the first frame, and the frame structure of the first frame satisfies one of the following: the number of rows is 4, the number of columns is 3824, the 1st to 16th columns include overhead of the first frame, and part of the 17th to 3824th columns also include the overhead of the first frame; or, the number of rows is 4, the number of columns is 3824, the 1st to 16th columns and the 1905th to 1920th columns include the overhead of the first frame; or, the number of rows is 4, the number of columns is 3824, the 1st to 16th columns and the 1913th to 1929th columns include the overhead of the first frame; or, the number of rows is 4, the number of columns is 3824, the 1st to 16th columns, the 965th to 968th columns, the 1917th to 1920th columns, the 2869th to 2872th columns, and the 3821th to 3824th columns include the overhead of the first frame; or, the number of rows is 4, the number of columns is X, the 1st to Yth columns include the overhead of the first frame, where X is an integer less than 2000, and Y is an integer less than or equal to 8. The solutions provided in certain exemplary embodiments of the present application define a new OSU frame (i.e., Sub-1G frame, i.e., the first frame) that carries therein service data in the OTN system. For small bandwidth services (e.g., services with data transmission rates ranging from 10 Mbps to 10 Gbps), the occurrence frequency of the overhead in the frame structure of the OSU frame is increased by increasing frame overhead or shortening frame length. Since the occurrence frequency of the overhead in the frame structure is associated with the time for the OTN system to perform protection switching, the time for the OTN system to perform protection switching can be shortened, thereby improving the processing efficiency of service data, that is, improving the transmission efficiency of service data.

In addition, the data processing method provided in one exemplary embodiment of the present application, for the above-mentioned problem 2, the sending end device maps the second service to the second frame, and each row in the frame structure of the second frame contains at least one FAS. In this way, the number of FAS is increased in the OSU frame (i.e., Sub-1G frame, i.e., the second frame) structure, thereby improving the positioning speed of the OSU frame.

In addition, the data processing method provided in one exemplary embodiment of the present application, for the above-mentioned problem 3, the sending end device maps the third service to the third frame, and each row in the frame structure of the third frame contains at least one MFAS. In this way, the number of MFAS is increased in the OSU frame (i.e., Sub-1G frame, i.e., the third frame) structure, thereby improving the multi-frame positioning speed of the OSU frame.

In addition, in accordance with the data processing method provided in one exemplary embodiment of the present application, for the above-mentioned problem 4, the sending end device maps the fourth service to the fourth frame, the overhead of the fourth frame includes the first information, the first information is used for one-way delay measurement, the first information includes at least a first timestamp, and the first timestamp represents the timing when the first information is placed in the fourth frame. In this way, it is realized that new DM information (i.e., the first information) containing the timestamp is defined for 1DM in the OTN system, so that the one-way delay measurement can be implemented based on the timestamp subsequently, thereby improving the accuracy of the one-way delay measurement.

In addition, in accordance with the data processing method provided in one exemplary embodiment of the present application, for the above-mentioned problem 4, the sending end device maps the fifth service to the fifth frame, the overhead of the fifth frame includes second information, the second information is used for two-way delay measurement, the second information includes at least a second timestamp, and the second timestamp represents the timing when the second information is placed in the fifth frame. In this way, it is realized that new DM information (i.e., the second information) including a timestamp is defined for 2DM in the OTN system, so that the two-way delay measurement can be implemented based on the timestamp subsequently, thereby improving the accuracy of the two-way delay measurement.

In order to implement the method on the sending end device side of one exemplary embodiment of the present application, the embodiment of the present application further provides a data processing apparatus, which is arranged on the sending end device. As shown in FIG. 19, the device includes:
a first mapping unit 1901 is configured to map a first service into a first frame, where a frame structure of the first frame satisfies one of the following:
the number of rows is 4, the number of columns is 3824, columns 1 to 16 are the overhead of the first frame, and part of columns 17 to 3824 also include the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are the overheads of the first frame; or,
the number of rows is 4, the number of columns is X, columns 1 to Y are the overhead of the first frame, where X is an integer less than 2000, and Y is an integer less than or equal to 8.

In one embodiment, as shown in FIG. 19, the device may further include:
a first sending unit 1902 configured to send the first frame, that is, to send the first frame to a receiving end device.

In actual application, the first mapping unit 1901 can be implemented by a processor in a data processing apparatus. In addition, the first sending unit 1902 can be implemented by a communication interface in the data processing apparatus.

In order to implement the method on the sending end device side of one exemplary embodiment of the present application, the embodiment of the present application further provides a data processing apparatus, which is arranged on the sending end device. As shown in FIG. 20, the device includes:
a second mapping unit 2001 configured to map a second service into a second frame, wherein each row in the frame structure of the second frame includes at least one FAS.

In one embodiment, as shown in FIG. 20, the device may further include:
a second sending unit 2002 configured to send the second frame, that is, to send the second frame to the receiving end device.

In actual application, the second mapping unit 2001 can be implemented by a processor in a data processing apparatus. In addition, the second sending unit 2002 can be implemented by a communication interface in the data processing apparatus.

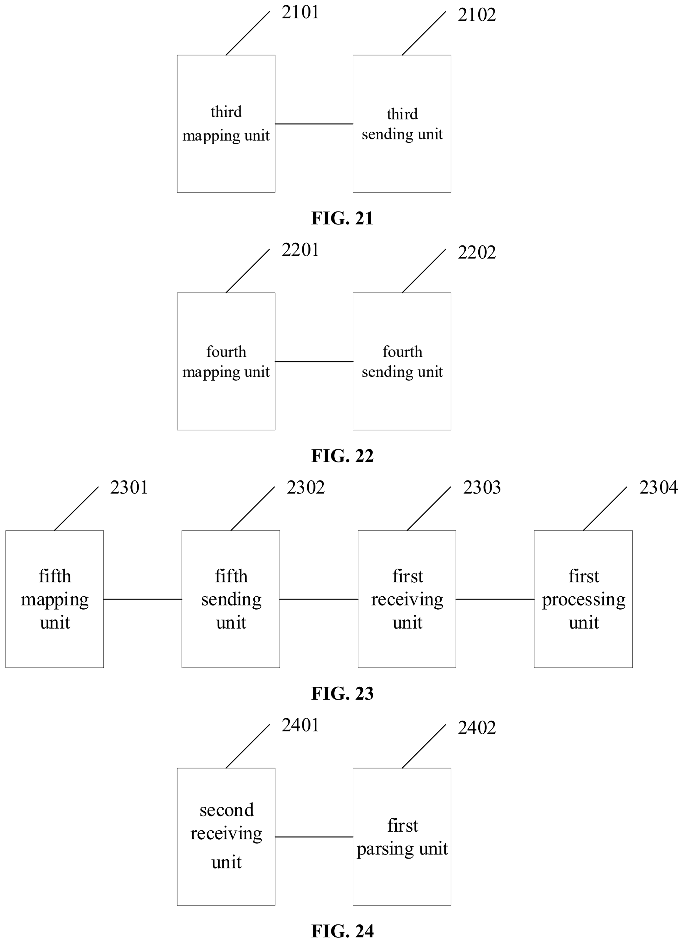

In order to implement the method on the sending end device side of one exemplary embodiment of the present application, the embodiment of the present application further provides a data processing apparatus, which is arranged on the sending end device. As shown in FIG. 21, the device includes:
a third mapping unit 2101 configured to map a third service into a third frame, wherein each row in the frame structure of the third frame includes at least one MFAS.

In one embodiment, as shown in FIG. 21, the device may further include:
a third sending unit 2102 configured to send the third frame, that is, to send the third frame to a receiving end device.

In actual application, the third mapping unit 2101 can be implemented by a processor in a data processing apparatus. In addition, the third sending unit 2102 can be implemented by a communication interface in the data processing apparatus.

In order to implement the method on the sending end device side of one exemplary embodiment of the present application, the embodiment of the present application further provides a data processing apparatus, which is arranged on the sending end device. As shown in FIG. 22, the device includes:
a fourth mapping unit 2201 configured to map a fourth service into a fourth frame, the overhead of the fourth frame includes first information, the first information is used for one-way delay measurement, the first information includes at least a first timestamp, and the first timestamp represents the timing when the first information is placed in the fourth frame.

In one embodiment, as shown in FIG. 22, the device may further include:
a fourth sending unit 2202 configured to send the fourth frame, that is, to send the fourth frame to the receiving end device.

In actual application, the fourth mapping unit 2201 can be implemented by a processor in a data processing apparatus. In addition, the fourth sending unit 2202 can be implemented by a communication interface in the data processing apparatus.

In order to implement the method on the sending end device side of one exemplary embodiment of the present application, the embodiment of the present application further provides a data processing apparatus, which is arranged on the sending end device. As shown in FIG. 23, the device includes:
a fifth mapping unit 2301 configured to map a fifth service to a fifth frame, the overhead of the fifth frame includes second information, the second information is used for two-way delay measurement, the second information includes at least a second timestamp, and the second timestamp represents the timing when the second information is placed in the fifth frame.

In one embodiment, as shown in FIG. 23, the device may further include:
a fifth sending unit 2302 configured to send the fifth frame, that is, to send the fifth frame to the receiving end device.

In one embodiment, as shown in FIG. 23, the device may further include:
a first receiving unit 2303 configured to receive the sixth frame, that is, to receive the sixth frame sent by the receiving end device, the overhead of the sixth frame includes third information, the third information is used for two-way delay measurement, the third information at least includes the second timestamp, the third timestamp and the fourth timestamp, the third timestamp represents the timing when the receiving end device receives the fifth frame, and the fourth timestamp represents the timing when the third information is placed in the sixth frame.

In one embodiment, as shown in FIG. 23, the device may further include:
a first processing unit 2304 configured to determine a result of a two-way delay measurement based on the second timestamp, the third timestamp, the fourth timestamp and the fifth timestamp, wherein the fifth timestamp represents the timing when the sending end device receives the sixth frame.

In actual application, the fifth mapping unit 2301 and the first processing unit 2304 can be implemented by a processor in a data processing apparatus. In addition, the fifth sending unit 2302 and the first receiving unit 2303 can be implemented by a communication interface in the data processing apparatus.

In order to implement the method on the receiving end device side of one exemplary embodiment of the present application, the embodiment of the present application further provides a data processing apparatus, which is arranged on the receiving end device. As shown in FIG. 24, the device includes:
a second receiving unit 2401 configured to receive a first frame, that is, to receive the first frame sent by a sending end device, where the frame structure of the first frame satisfies one of the following:
the number of rows is 4, the number of columns is 3824, columns 1 to 16 are the overhead of the first frame, and part of columns 17 to 3824 also include the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are overheads of the first frame; or,
the number of rows is 4, the number of columns is X, columns 1 to Y are overheads of the first frame, where X is an integer less than 2000, and Y is an integer less than or equal to 8; and
a first parsing unit 2402 configured to parse the first frame to obtain a first service.

In actual application, the second receiving unit 2401 can be implemented by a communication interface in a data processing apparatus. In addition, the first parsing unit 2402 can be implemented by a processor in the data processing apparatus.

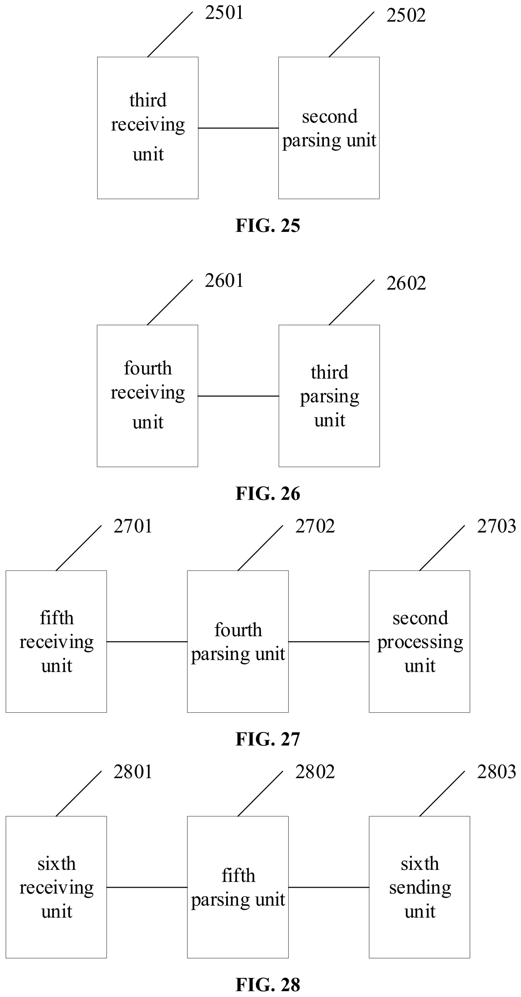

In order to implement the method on the receiving end device side of one exemplary embodiment of the present application, the embodiment of the present application further provides a data processing apparatus, which is arranged on the receiving end device. As shown in FIG. 25, the device includes:
a third receiving unit 2501 configured to receive a second frame, that is, to receive the second frame sent by the sending end device, wherein each row in the frame structure of the second frame includes at least one FAS; and
a second parsing unit 2502 configured to parse the second frame to obtain a second service.

In actual application, the third receiving unit 2501 can be implemented by a communication interface in a data processing apparatus. In addition, the second parsing unit 2502 can be implemented by a processor in the data processing apparatus.

In order to implement the method on the receiving end device side of one exemplary embodiment of the present application, the embodiment of the present application further provides a data processing apparatus, which is arranged on the receiving end device. As shown in FIG. 26, the device includes:
a fourth receiving unit 2601 configured to receive a third frame, that is, to receive the third frame sent by the sending end device, wherein each row in the frame structure of the third frame includes at least one MFAS; and
a third parsing unit 2602 configured to parse the third frame to obtain a third service.

In actual application, the fourth receiving unit 2601 can be implemented by a communication interface in a data processing apparatus. In addition, the third parsing unit 2602 can be implemented by a processor in the data processing apparatus.

In order to implement the method on the receiving end device side of one exemplary embodiment of the present application, the embodiment of the present application further provides a data processing apparatus, which is arranged on the receiving end device. As shown in FIG. 27, the device includes:
a fifth receiving unit 2701 configured to receive a fourth frame, that is, to receive the fourth frame sent by the sending end device, wherein the overhead of the fourth frame includes first information, the first information is used for one-way delay measurement, and the first information includes at least a first timestamp, and the first timestamp represents the timing when the first information is placed in the fourth frame; and
a fourth parsing unit 2702 configured to parse the fourth frame to obtain a fourth service.

In one embodiment, as shown in FIG. 27, the device may further include:
a second processing unit 2703 configured to calculate the difference between a sixth timestamp and the first timestamp to obtain a one-way delay measurement result, wherein the sixth timestamp represents the timing when the receiving end device receives the fourth frame.

In actual application, the fifth receiving unit 2701 can be implemented by a communication interface in a data processing apparatus. In addition, the fourth parsing unit 2702 and the second processing unit 2703 can be implemented by a processor in the data processing apparatus.

In order to implement the method on the receiving end device side of one exemplary embodiment of the present application, the embodiment of the present application further provides a data processing apparatus, which is arranged on the receiving end device. As shown in FIG. 28, the device includes:
a sixth receiving unit 2801 configured to receive a fifth frame, that is, to receive the fifth frame sent by the sending end device, where the overhead of the fifth frame includes second information, where the second information is used for two-way delay measurement, and where the second information includes at least a second timestamp, where the second timestamp represents the timing when the second information is placed in the fifth frame; and
a fifth parsing unit 2802 configured to parse the fifth frame to obtain a fifth service.

In one embodiment, as shown in FIG. 28, the device may further include:
a sixth sending unit 2803 configured to send the sixth frame, that is, to send the sixth frame to the sending end device, the overhead of the sixth frame includes third information, the third information is used for two-way delay measurement, the third information at least includes the second timestamp, the third timestamp and the fourth timestamp, the third timestamp represents the timing when the receiving end device receives the fifth frame, and the fourth timestamp represents the timing when the third information is placed in the sixth frame.

In actual application, the sixth receiving unit 2801 and the sixth sending unit 2803 can be implemented by a communication interface in a data processing apparatus. In addition, the fifth parsing unit 2802 can be implemented by a processor in the data processing apparatus.

It should be noted that: when the data processing apparatus provided in the above embodiments processes data, only the division of the above program modules is used as an example. In actual applications, the above processing can be assigned to different program modules as needed, that is, the internal structure of the device is divided into different program modules to complete all or part of the processing described above. In addition, the data processing apparatus provided in the above embodiments and the data processing method embodiments belong to the same concept, and the specific implementation process is detailed in the method embodiment, which will not be repeated here.

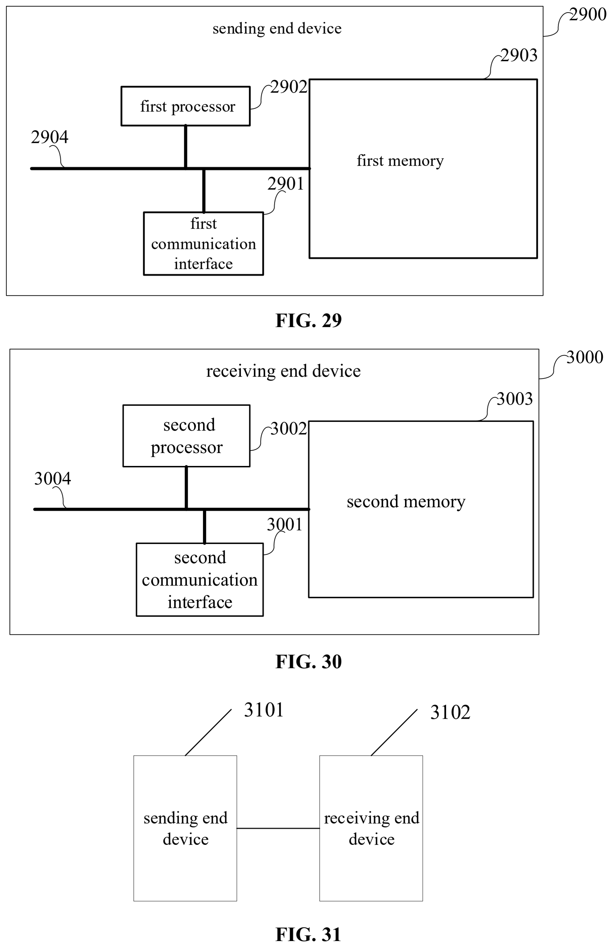

Based on the hardware implementation of the above program module, and in order to implement the method on the sending end device side of one exemplary embodiment of the present application, the embodiment of the present application further provides a sending end device. As shown in FIG. 29, the sending end device 2900 includes:
a first communication interface 2901 which is capable of exchanging information with a receiving end device;
a first processor 2902 which is connected to the first communication interface 2901 to implement information interaction with a receiving end device, and is used to execute the method provided by one or more technical solutions of the sending end device side when running a computer program; and
a first memory 2903, on which the computer program is stored.

Specifically, the first processor 2902 is configured to map a first service into a first frame, where the frame structure of the first frame satisfies one of the following:
the number of rows is 4, the number of columns is 3824, columns 1 to 16 are the overhead of the first frame, and part of columns 17 to 3824 also include the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are overheads of the first frame; or,
the number of rows is 4, the number of columns is X, columns 1 to Y are overheads of the first frame, where X is an integer less than 2000, and Y is an integer less than or equal to 8.

Alternatively, the first processor 2902 is configured to map the second service into a second frame, wherein each row in the frame structure of the second frame includes at least one FAS.

Alternatively, the first processor 2902 is configured to map the third service into a third frame, wherein each row in the frame structure of the third frame includes at least one MFAS.

Alternatively, the first processor 2902 is configured to map the fourth service to a fourth frame, where the overhead of the fourth frame includes first information, where the first information is used for one-way delay measurement, and where the first information includes at least a first timestamp, where the first timestamp represents the timing when the first information is placed in the fourth frame.

Alternatively, the first processor 2902 is used to map the fifth service to a fifth frame, the overhead of the fifth frame includes second information, the second information is used for two-way delay measurement, the second information includes at least a second timestamp, and the second timestamp represents the timing when the second information is placed in the fifth frame.

In one embodiment, when the first processor 2902 maps the first service into the first frame, the first communication interface 2901 is used to send the first frame, that is, to send the first frame to the receiving end device.

In one embodiment, when the first processor 2902 maps the second service into the second frame, the first communication interface 2901 is used to send the second frame, that is, to send the second frame to the receiving end device.

In one embodiment, when the first processor 2902 maps the third service into a third frame, the first communication interface 2901 is used to send the third frame, that is, to send the third frame to a receiving end device.

In one embodiment, when the first processor 2902 maps the fourth service into a fourth frame, the first communication interface 2901 is used to send the fourth frame, that is, to send the fourth frame to a receiving end device.

In one embodiment, when the first processor 2902 maps the fifth service into the fifth frame, the first communication interface 2901 is used to send the fifth frame, that is, to send the fifth frame to the receiving end device.

In one embodiment, when the first processor 2902 maps the fifth service to the fifth frame, the first communication interface 2901 is also used to receive a sixth frame, that is, to receive the sixth frame sent by the receiving end device, the overhead of the sixth frame includes third information, the third information is used for two-way delay measurement, the third information includes at least the second timestamp, the third timestamp and the fourth timestamp, the third timestamp represents the timing when the receiving end device receives the fifth frame, and the fourth timestamp represents the timing when the third information is placed in the sixth frame.

In one embodiment, when the fifth service is mapped into the fifth frame, the first memory 2903 is also configured to determine the result of the two-way delay measurement based on the second timestamp, the third timestamp, the fourth timestamp and the fifth timestamp, and the fifth timestamp represents the timing when the sending end device receives the sixth frame.

It should be noted that the specific processing process of the first processor 2902 and the first communication interface 2901 can be understood by referring to the above method, which will not be repeated here.

Of course, in actual application, the various components in the sending end device 2900 are coupled together through the bus system 2904. It can be understood that the bus system 2904 is used to realize the connection and communication between these components. In addition to the data bus, the bus system 2904 also includes a power bus, a control bus and a status signal bus. However, for the sake of clarity, various buses are marked as bus system 2904 in FIG. 29.

The first memory 2903 in one exemplary embodiment of the present application is used to store various types of data to support the operation of the sending end device 2900. Examples of such data include: any computer program used to operate on the sending end device 2900.

The method disclosed in the above embodiment of the present application can be applied to the first processor 2902, or implemented by the first processor 2902. The first processor 2902 may be an integrated circuit chip with signal processing capabilities. In the implementation process, each step of the above method can be completed by the hardware integrated logic circuit or software instructions in the first processor 2902. The above-mentioned first processor 2902 may be a general-purpose processor, a digital signal processor (DSP, Digital Signal Processor), or other programmable logic devices, discrete gates or transistor logic devices, discrete hardware components, etc. The first processor 2902 can implement or execute the various methods, steps and logic block diagrams disclosed in the embodiments of the present application. A general-purpose processor may be a microprocessor or any conventional processor, etc. In combination with the steps of the method disclosed in one exemplary embodiment of the present application, it can be directly embodied as a hardware decoding processor to execute, or it can be executed by a combination of hardware and software modules in the decoding processor. The software module may be located in a storage medium, which is located in the first memory 2903. The first processor 2902 reads the information in the first memory 2903 and completes the steps of the above method in combination with its hardware.

In an exemplary embodiment, the sending end device 2900 can be implemented by one or more application specific integrated circuits (ASICs), DSPs, programmable logic devices (PLDs), complex programmable logic devices (CPLDs), field programmable gate arrays (FPGAs), general-purpose processors, controllers, microcontrollers (MCUs), microprocessors, or other electronic components to execute the aforementioned method.

Based on the hardware implementation of the above program modules, and in order to implement the method on the receiving end device side of one exemplary embodiment of the present application, the embodiment of the present application further provides a receiving end device. As shown in FIG. 30, the receiving end device 3000 includes:
a second communication interface 3001 which is capable of exchanging information with the sending end device;
a second processor 3002 which is connected to the second communication interface 3001 to implement information interaction with the sending end device, and is used to execute the method provided by one or more technical solutions on the receiving end device side when running the computer program; and
a second memory 3003, on which the computer program is stored.

Specifically, the second communication interface 3001 is used to receive a first frame, that is, to receive the first frame sent by a sending end device, and the frame structure of the first frame satisfies one of the following:
the number of rows is 4, the number of columns is 3824, the columns 1 to 16 are the overhead of the first frame, and columns 17 to the 3824 also include the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are overheads of the first frame; or,
the number of rows is 4, the number of columns is X, columns 1 to Y are overheads of the first frame, where X is an integer less than 2000, and Y is an integer less than or equal to 8; and
a second processor 3002 is used to parse the first frame to obtain a first service.

Alternatively, the second communication interface 3001 is used to receive a second frame, that is, to receive the second frame sent by the sending end device, each row in the frame structure of the second frame includes at least one FAS; the second processor 3002 is used to parse the second frame to obtain a second service.

Alternatively, the second communication interface 3001 is used to receive a third frame, that is, to receive the third frame sent by the sending end device, each row in the frame structure of the third frame includes at least one MFAS; the second processor 3002 is used to parse the third frame to obtain a third service.

Alternatively, the second communication interface 3001 is used to receive a fourth frame, that is, to receive the fourth frame sent by the sending end device, the overhead of the fourth frame includes first information, the first information is used for one-way delay measurement, and the first information includes at least a first timestamp, and the first timestamp represents the timing when the first information is placed in the fourth frame; the second processor 3002 is used to parse the fourth frame to obtain a fourth service.

Alternatively, the second communication interface 3001 is used to receive the fifth frame, that is, to receive the fifth frame sent by the sending end device, the overhead of the fifth frame includes second information, the second information is used for two-way delay measurement, the second information at least includes a second timestamp, and the second timestamp represents the timing when the second information is placed in the fifth frame; the second processor 3002 is used to parse the fifth frame to obtain the fifth service.

In one embodiment, when parsing the fourth frame, the second processor 3002 is also used to calculate the difference between the sixth timestamp and the first timestamp to obtain the result of one-way delay measurement, and the sixth timestamp represents the timing when the receiving end device receives the fourth frame.

In one embodiment, when receiving the fifth frame, the second communication interface 3001 is also used to send the sixth frame, that is, to send the sixth frame to the sending end device, the overhead of the sixth frame includes third information, the third information is used for two-way delay measurement, the third information includes at least the second timestamp, the third timestamp and the fourth timestamp, the third timestamp represents the timing when the receiving end device receives the fifth frame, and the fourth timestamp represents the timing when the third information is placed in the sixth frame.

It should be noted that the specific processing process of the second communication interface 3001 and the second processor 3002 can be understood by referring to the above method, which will not be repeated here.

Of course, in actual application, the various components in the receiving end device 3000 are coupled together through the bus system 3004. It can be understood that the bus system 3004 is used to realize the connection and communication between these components. In addition to the data bus, the bus system 3004 also includes a power bus, a control bus and a status signal bus. However, for the sake of clarity, various buses are marked as bus system 3004 in FIG. 30.

The second memory 3003 in one exemplary embodiment of the present application is used to store various types of data to support the operation of the receiving end device 3000. Examples of such data include: any computer program used to operate on the receiving end device 3000.

The method disclosed in the above embodiment of the present application can be applied to the second processor 3002, or implemented by the second processor 3002. The second processor 3002 may be an integrated circuit chip with signal processing capabilities. In the implementation process, each step of the above method can be completed by the hardware integrated logic circuit or software instructions in the second processor 3002. The above second processor 3002 may be a general-purpose processor, DSP, or other programmable logic devices, discrete gates or transistor logic devices, discrete hardware components, etc. The second processor 3002 can implement or execute the methods, steps and logic block diagrams disclosed in the embodiments of the present application. A general-purpose processor may be a microprocessor or any conventional processor, etc. In combination with the steps of the method disclosed in one exemplary embodiment of the present application, it can be directly embodied as a hardware decoding processor to execute, or it can be executed by a combination of hardware and software modules in the decoding processor. The software module can be located in a storage medium, which is located in the second memory 3003. The second processor 3002 reads the information in the second memory 3003 and completes the steps of the above method in combination with its hardware.

In an exemplary embodiment, the receiving end device 3000 can be implemented by one or more ASICs, DSPs, PLDs, CPLDs, FPGAs, general-purpose processors, controllers, MCUs, Microprocessors, or other electronic components to perform the aforementioned method.

It can be understood that the memory (the first memory 2903 or the second memory 3003) of one exemplary embodiment of the present application can be a volatile memory or a non-volatile memory, and can also include both volatile and non-volatile memories. Among them, the non-volatile memory can be a read-only memory (ROM), a programmable read-only memory (PROM), an erasable programmable read-only memory (EPROM), an electrically erasable programmable read-only memory (EEPROM), a magnetic random access memory (FRAM), a ferromagnetic random access memory, a flash memory, a magnetic surface memory, an optical disc, or a compact disc read-only memory (CD-ROM); the magnetic surface memory can be a disk memory or a tape memory. The volatile memory can be a random access memory (RAM), which is used as an external cache. By way of example but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronous link dynamic random access memory (SLDRAM), direct memory bus random access memory (DRRAM). The memory described in the embodiments of the present application is intended to include but is not limited to these and any other suitable types of memory.

In order to implement the method provided in one exemplary embodiment of the present application, the embodiment of the present application also provides a data processing system. As shown in FIG. 31, the system includes: a sending end device 3101 and a receiving end device 3102.

Here, it should be noted that the specific processing process of the sending end device 3101 and the receiving end device 3102 has been described in detail above and will not be repeated here.

In an exemplary embodiment, one exemplary embodiment of the present application further provides a storage medium, namely a computer storage medium, specifically a computer-readable storage medium, for example, including a first memory 2903 storing a computer program, and the computer program can be executed by the first processor 2902 of the sending end device 2900 to complete the steps of the aforementioned sending end device side method. For another example, including a second memory 3003 storing a computer program, the computer program can be executed by the second processor 3002 of the receiving end device 3000 to complete the steps of the aforementioned receiving end device side method. The computer-readable storage medium can be a memory such as FRAM, ROM, PROM, EPROM, EEPROM, Flash Memory, magnetic surface storage, optical disk, or CD-ROM.

It should be noted that: "first", "second", etc. are used to distinguish similar objects, and are not necessarily used to describe a specific order or sequence.

In addition, the technical solutions described in the embodiments of the present application can be combined arbitrarily without conflict.

The above description is only a preferred embodiment of the present application and is not intended to limit the protection scope of the present application.

## Claims

1. A data processing method, performed by a sending end device, comprising:
mapping a first service into a first frame, wherein a frame structure of the first frame satisfies one of the following:
the number of rows is 4, the number of columns is 3824, columns 1 to 16 are overhead of the first frame, and part of columns 17 to 3824 also comprise the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are the overhead of the first frame; or,
the number of rows is 4, the number of columns is X, columns 1 to Y are the overhead of the first frame, where X is an integer less than 2000, and Y is an integer less than or equal to 8.

2. The method according to claim 1, further comprising:
sending the first frame.

3. A data processing method, performed by a sending end device, comprising:
mapping a second service into a second frame, wherein each row in a frame structure of the second frame comprises at least one Frame Align Sequence (FAS).

4. The method according to claim 3, further comprising:
sending the second frame.

5. A data processing method, performed by a sending end device, comprising:
mapping a third service into a third frame, wherein each row in a frame structure of the third frame comprises at least one Multi-frame Align Sequence (MFAS).

6. The method according to claim 5, further comprising:
sending the third frame.

7. A data processing method, performed by a sending end device, comprising:
mapping a fourth service into a fourth frame, wherein overhead of the fourth frame comprises first information, the first information is used for one-way delay measurement, the first information comprises at least a first timestamp, and the first timestamp represents timing when the first information is placed in the fourth frame.

8. The method according to claim 7, wherein the first information is placed in a Tandem Connection Monitoring (TCM) field or a Path Monitoring (PM) field.

9. The method according to claim 7, further comprising:
sending the fourth frame.

10. A data processing method, performed by a sending end device, comprising:
mapping a fifth service into a fifth frame, wherein overhead of the fifth frame comprises second information, the second information is used for two-way delay measurement, the second information comprises at least a second timestamp, and the second timestamp represents timing when the second information is placed in the fifth frame.

11. The method according to claim 10, wherein the second information is placed in a Tandem Connection Monitoring (TCM) field or a Path Monitoring (PM) field.

12. The method according to claim 10, further comprising:
sending the fifth frame.

13. The method according to claim 12, further comprising:
receiving a sixth frame, wherein overhead of the sixth frame comprises third information, the third information is used for two-way delay measurement, the third information at least comprises the second timestamp, a third timestamp and a fourth timestamp, the third timestamp represents timing when a receiving end device receives the fifth frame, and the fourth timestamp represents timing when the third information is placed in the sixth frame.

14. The method according to claim 13, further comprising:
determining a result of the two-way delay measurement on the basis of the second timestamp, the third timestamp, the fourth timestamp, and the fifth timestamp, wherein the fifth timestamp represents timing when the sending end device receives the sixth frame.

15. The method according to claim 13, wherein the third information is placed in the TCM field or the PM field.

16. A data processing method, performed by a receiving end device, comprising:
receiving a fourth frame, wherein overhead of the fourth frame comprises first information, the first information is used for one-way delay measurement, the first information comprises at least a first timestamp, and the first timestamp represents timing when the first information is placed in the fourth frame; and
parsing the fourth frame to obtain a fourth service.

17. The method according to claim 16, further comprising:
calculating a difference between a sixth timestamp and the first timestamp to obtain a result of the one-way delay measurement, wherein the sixth timestamp represents timing when the receiving end device receives the fourth frame.

18. The method according to claim 16, wherein the first information is placed in a Tandem Connection Monitoring (TCM) field or a Path Monitoring (PM) field.

19. A data processing method, performed by a receiving end device, comprising:
receiving a fifth frame, wherein overhead of the fifth frame comprises second information, the second information is used for two-way delay measurement, the second information comprises at least a second timestamp, and the second timestamp represents timing when the second information is placed in the fifth frame; and
parsing the fifth frame to obtain a fifth service.

20. The method according to claim 19, wherein the second information is placed in a Tandem Connection Monitoring (TCM) field or a Path Monitoring (PM) field.

21. The method according to claim 19, further comprising:
sending the sixth frame, wherein overhead of the sixth frame comprises third information, the third information is used for two-way delay measurement, the third information at least comprises the second timestamp, a third timestamp and a fourth timestamp, the third timestamp represents timing when the receiving end device receives the fifth frame, and the fourth timestamp represents timing when the third information is placed in the sixth frame.

22. The method according to claim 21, wherein the third information is placed in a Tandem Connection Monitoring (TCM) field or a Path Monitoring (PM) field.

23. A data processing apparatus, comprising:
a first mapping unit configured to map a first service into a first frame, wherein a frame structure of the first frame satisfies one of the following:
the number of rows is 4, the number of columns is 3824, columns 1 to 16 are overhead of the first frame, and part of columns 17 to 3824 also comprise the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are the overhead of the first frame; or,
the number of rows is 4, the number of columns is X, columns 1 to Y are the overhead of the first frame, where X is an integer less than 2000, and Y is an integer less than or equal to 8.

24. A data processing apparatus, comprising:
a second mapping unit configured to map a second service into a second frame, wherein each row in a frame structure of the second frame comprises at least one Frame Align Sequence (FAS).

25. A data processing apparatus, comprising:
a third mapping unit configured to map a third service into a third frame, wherein each row in a frame structure of the third frame comprises at least one Multi-frame Align Sequence (MFAS).

26. A data processing apparatus, comprising:
a fourth mapping unit configured to map a fourth service into a fourth frame, wherein overhead of the fourth frame comprises first information, the first information is used for one-way delay measurement, the first information comprises at least a first timestamp, and the first timestamp represents timing when the first information is placed in the fourth frame.

27. A data processing apparatus, comprising:
a fifth mapping unit configured to map a fifth service into a fifth frame, wherein overhead of the fifth frame comprises second information, the second information is used for two-way delay measurement, the second information comprises at least a second timestamp, and the second timestamp represents timing when the second information is placed in the fifth frame.

28. A data processing apparatus, comprising:
a fifth receiving unit configured to receive a fourth frame, wherein overhead of the fourth frame comprises first information, the first information is used for one-way delay measurement, the first information comprises at least a first timestamp, and the first timestamp represents timing when the first information is placed in the fourth frame; and
a fourth parsing unit configured to parse the fourth frame to obtain a fourth service.

29. A data processing apparatus, comprising:
a sixth receiving unit configured to receive a fifth frame, wherein overhead of the fifth frame comprises second information, the second information is used for two-way delay measurement, the second information comprises at least a second timestamp, and the second timestamp represents timing when the second information is placed in the fifth frame; and
a fifth parsing unit configured to parse the fifth frame to obtain a fifth service.

30. A sending end device, comprising: a first communication interface and a first processor; wherein:
the first processor is configured to map a first service into a first frame, wherein a frame structure of the first frame satisfies one of the following:
the number of rows is 4, the number of columns is 3824, columns 1 to 16 are overhead of the first frame, and part of columns 17 to 3824 also comprise the overhead of the first frame; or,
the number of rows is 4, the number of columns is 3824, and columns 1 to 16 and columns 1905 to 1920 are the overhead of the first frame; or,
the number of rows is 4, the number of columns is 3824, and columns 1 to 16 and columns 1913 to 1929 are the overhead of the first frame; or,
the number of rows is 4, the number of columns is 3824, and columns 1 to 16, columns 965 to 968, columns 1917 to 1920, columns 2869 to 2872, and columns 3821 to 3824 are the overhead of the first frame; or,
the number of rows is 4, the number of columns is X, columns 1 to Y are the overhead of the first frame, where X is an integer less than 2000, and Y is an integer less than or equal to 8.

31. A sending end device, comprising: a first communication interface and a first processor; wherein:
the first processor is configured to map a second service into a second frame, wherein each row in a frame structure of the second frame comprises at least one Frame Align Sequence (FAS).

32. A sending end device, comprising: a first communication interface and a first processor; wherein:
the first processor is configured to map a third service into a third frame, wherein each row in a frame structure of the third frame comprises at least one Multi-frame Align Sequence (MFAS).

33. A sending end device, comprising: a first communication interface and a first processor; wherein:
the first processor is configured to map a fourth service to a fourth frame, wherein overhead of the fourth frame comprises first information, the first information is used for one-way delay measurement, the first information comprises at least a first timestamp, and the first timestamp represents timing when the first information is placed in the fourth frame.

34. A sending end device, comprising: a first communication interface and a first processor; wherein:
the first processor is configured to map a fifth service into a fifth frame, wherein overhead of the fifth frame comprises second information, the second information is used for two-way delay measurement, the second information comprises at least a second timestamp, and the second timestamp represents timing when the second information is placed in the fifth frame.

35. A receiving end device, comprising:
a second communication interface configured to receive a fourth frame, wherein overhead of the fourth frame comprises first information, the first information is used for one-way delay measurement, the first information comprises at least a first timestamp, and the first timestamp represents timing when the first information is placed in the fourth frame; and
a second processor configured to parse the fourth frame to obtain a fourth service.

36. A receiving end device, comprising:
a second communication interface configured to receive a fifth frame, wherein overhead of the fifth frame comprises second information, the second information is used for two-way delay measurement, the second information comprises at least a second timestamp, and the second timestamp represents timing when the second information is placed in the fifth frame; and
a second processor configured to parse the fifth frame to obtain a fifth service.

37. A sending end device, comprising: a first processor and a first memory used for storing a computer program that is executed on the first processor,
wherein, when the first processor is used to execute the computer program, steps of the method according to claim 1 or 2, or steps of the method according to claim 3 or 4, or steps of the method according to claim 5 or 6, or steps of the method according to any one of claims 7 to 9, or steps of the method according to any one of claims 10 to 15 are carried out.

38. A receiving end device, comprising: a second processor and a second memory for storing a computer program that is executed on the second processor,
wherein, when the second processor is used to execute the computer program, steps of the method according to any one of claims 16 to 18, or steps of the method according to any one of claims 19 to 22 are carried out.

39. A storage medium having a computer program stored thereon, wherein when the computer program is executed by a processor, the computer program implements steps of the method according to claim 1 or 2, or steps of the method according to claim 3 or 4, or steps of the method according to claim 5 or 6, or steps of any one of claims 7 to 9, or steps of any one of claims 10 to 15, or steps of any one of claims 16 to 18, or steps of any one of claims 19 to 22.
